# EUROPÄISCHE PATENTANMELDUNG

(11) **EP 0 996 010 A2**
(43) Veröffentlichungstag der Anmeldung: **26.04.2000**
(21) Anmeldenummer: 99119598.3
(22) Anmeldetag: 02.10.1999
(51) Int. Cl.: G02B 6/38

(54) **Verfahren zum Befestigen eines Lichtleitfaserendes in einer Kunststoffkontakthülse und entsprechend hergestellter Kunststoffkontakt**

(30) Priorität: 23.10.1998 DE 19849026
(71) Anmelder: Bayerische Motoren Werke Aktiengesellschaft, 80788 München (DE); THE WHITAKER CORPORATION, Wilmington, Delaware 19808 (US)
(72) Erfinder: Weigert, Patrick, 85375 Neufahrn (DE); Fahrnbauer, Bernhard, 80339 München (DE); Wendling, Hannes, 63225 Langen (DE); Wiese, Klaus, 65843 Sulzbach (DE)
(74) Vertreter: Bullwein, Fritz

(57) **Zusammenfassung**

Die Erfindung betrifft ein Verfahren zum Befestigen eines Lichtleitfaserendes aus Kunststoff in einer Kontakthülse aus Kunststoff wobei das Lichtleitfaserende in eine definierte Lage in die Kontakthülse (6) eingebracht wird, und die Kontakthülse (6) mit Ultraschallenergie beaufschlagt wird und dadurch Kontakthülse und Lichtleitfaserende miteinander verbunden werden, die Kontakthülse weist dabei eine konzentrische Bohrung 15 auf zur Aufnahme des Lichtleitfaserendes.

## Beschreibung

Die Erfindung betrifft ein Verfahren zum Befestigen eines Lichtleitfaserendes aus Kunststoff in einer Kunststoffkontakthülse sowie einen entsprechend hergestellten Kunststoffkontakt mit einem Lichtleitfaserende.

Aus der US 5,421,298 ist es bekannt, ein Lichtleitfaserende in einer Hülse (Ferrule) zu fixieren, derart, dass das Ende über die Stirnfläche der Hülse herausragt, das Ende dann mittels eines Lasers abzuschneiden und danach die Stirnfläche von Hülse und Lichtleitfaser mechanisch zu polieren.

Aus der JP 58-1082508 A ist es bekannt, ein Faserende in einer Hülse zu fixieren, indem beides gegen eine Endfläche geschoben wird. Die Faser wird dann vorläufig zu der Hülse fixiert. Das Faserende wird erhitzt und dadurch gereinigt und geglättet, wonach dann die Faser mit der Hülse verklebt wird.

Aus der US 4,510,005 ist es bekannt, ein Faserende in eine Hülse einzubringen und gegen eine hochpolierte Oberfläche zu drücken. Durch Erhitzen dieser Oberfläche wird die Oberfläche des Faserendes angeschmolzen und passt sich der hochpolierten Oberfläche an. Es ist möglich, gleichzeitig mit dem Erhitzen einen Klebstoff zwischen der Faser und der Hülse zu aktivieren und die Faser somit gleichzeitig in der Hülse zu verkleben.

Auch aus der US 4,695,124 ist es bekannt, eine optische Faser mit einer Hülse mittels Wärme zu verschmelzen. Faser und Hülse bestehen dabei aus Kunststoff.

Ausgehend von diesem Stand der Technik, ist es Aufgabe der Erfindung, ein Verfahren zum Befestigen eines Lichtleitfaserendes aus Kunststoff in einer Kontakthülse aus Kunststoff anzugeben, das besonders zuverlässig durchgeführt werden kann, sowie einen entsprechend hergestellten Kunststoffkontakt anzugeben. Die Aufgabe wird bezüglich des Verfahrens gelöst durch ein Verfahren mit den Merkmalen des Patentanspruches 1. Bezüglich des Kunststoffkontaktes wird die Aufgabe durch einen Kontakt mit den Merkmalen des Patentanspruches 9 gelöst. Vorteilhafte Weiterbildungen sind jeweils in den Unteransprüchen angegeben.

Es ist besonders einfach und kostengünstig, ein Lichtleitfaserende aus Kunststoff mit einer Kunststoffhülse zu verschmelzen. Ein solches Verfahren kann beispielsweise mittels einer Wärmebehandlung durchgeführt werden. Dabei ist es von Nachteil, dass ein räumlich gezieltes Aufbringen von Wärme sehr schwierig ist.

Das erfindungsgemäss vorgeschlagene Verfahren ist besonders vorteilhaft, da eine sichere Halterung der Lichtleitfaser in einer Kunststoffkontakthülse erreicht wird.

Beim Einbringen des Lichtleitfaserendes in die Kunststoffhülse ist eine definierte Lage des Lichtleitfaserendes in der Kontakthülse vorgesehen. Die definierte Lage wird dadurch erreicht, dass das Lichtleitfaserende relativ zur Stirnseite der Kunststoffhülse positioniert wird. Das einzubringende Lichtleitfaserende, das einen Aussenmantel aufweist, ist bereits an der Stirnfläche bearbeitet und über eine vorgegebene Länge vom Aussenmantel befreit. Beim Einbringen des Lichtleitfaserendes in die Kontakthülse findet eine Positionierung in Bezug auf die Stirnfläche der Kontakthülse statt. Dadurch wird die definierte Lage des Lichtleitfaserendes in der Kontakthülse erreicht. Es spielt dabei keine Rolle, ob die Kontakthülse einteilig ausgebildet ist und das Lichtleitfaserende von einem Ende her eingeschoben wird oder ob die Kontakthülse aus zwei Schalen besteht, die miteinander verbunden werden.

Eine Erhöhung der Auszugskräfte des Lichtleitfaserendes aus der Kontakthülse kann dadurch erreicht werden, dass das Lichtleitfaserende mit der Kontakthülse verschmolzen wird. Dies kann sowohl im Bereich des Aussenmantels erfolgen als auch im Bereich des Primärmantels oder Kernes der Lichtleitfaser. Besonders hohe Ausreisskräfte werden dadurch erzielt, dass eine Verschmelzung von Kontakthülse und Lichtleitfaserende, sowohl am Aussenmantel als auch am Primärmantel oder Kern durchgeführt werden. Es ist von besonderem Vorteil, den Primärmantel oder Kern mit der Kontakthülse zu verschmelzen, da dann eine Veränderung der Stirnflächenposition der Lichtleitfaser durch unterschiedliche Wärmeausdehnungen vermieden wird.

Es ist weiter von besonderem Vorteil, wenn die Wandung der Bohrung der Kontakthülse strukturiert ist. Dadurch können ebenfalls erhöhte Auszugskräfte erreicht werden. Die Struktur kann nicht nur eine Klemmung des Lichtleitfaserendes bewirken, sondern gleichzeitig zu einem Verschmelzen an definierten Stellen zwischen dem Lichtleitfaserende und der Kontakthülse führen, wenn die Kontakthülse entsprechend mit Ultraschall beaufschlagt wird.

Es ist weiter von besonderem Vorteil, die Kontakthülse zumindest bereichsweise in zwei Halbschalen zu teilen, die mittels Ultraschall verbunden werden. Dabei kann das Lichtleitfaserende zwischen den beiden Halbschalen geklemmt werden. Die Halbschalen können durch Ultraschallverschweissen oder mittels entsprechender Raststrukturen miteinander verbunden werden. Weiter kann durch die Ausformung der Kontakthülsen in zwei Halbschalen erreicht werden, dass eine Strukturierung der Wandung der Bohrung besonders leicht herstellbar ist. Die Strukturierung kann dadurch auch nahezu beliebige Formen aufweisen, beispielsweise rippenförmig, waffelförmig, pyramidenförmig oder zylinderkegelförmig ausgebildet sein.

Es ist besonders vorteilhaft, dass mit einer Kontakthülse aus zwei Halbschalen das Lichtwellenleiterende nicht nur geklemmt, sondern zusätzlich mittels Ultraschall verschweisst werden kann. Eine besonders vorteilhafte Befestigung des Lichtleitfaserendes in der Kontakthülse wird erreicht, wenn das Lichtleitfaserende im Bereich des Aussenmantels geklemmt und im Bereich des Primärmantels oder Kernes mit der Kontakthülse Ultraschallverschweisst ist.

In einer einteiligen Kontakthülse kann ebenfalls eine Struktur auf der Wandung der Bohrung ausgebildet sein, die die Form eines Gewindes oder von Längsrippen aufweist. Diese können dann mit dem Lichtleitfaserende ultraschallverschweisst werden, aber eine zusätzliche Klemmung ist nur unter Verformung der Aussengeometrie nicht möglich.

Es ist weiter von besonderem Vorteil, dass die beiden Halbschalen Zentrier - und Positionierzapfen beziehungsweise entsprechende Vertiefungen aufweisen, zur Positionierung gegeneinander.

Ausserdem ist es von besonderem Vorteil, wenn die Halbschalen im Bereich der Flächen, die miteinander verbunden werden, Schweissrippen aufweisen, als Ultraschallrichtungsgeber, die ein Verschweissen mittels Ultraschall erleichtern.

Es ist weiter von besonderem Vorteil, wenn zwei Arten von Kontaktschalen bereitgestellt werden, wobei die erste stirnseitig einen Aufnahmebereich aufweist und die zweite Stirnseite derart ausgebildet ist, dass sie mit diesem Ende in den Aufnahmebereich einbringbar ist. Dadurch wirken die beiden Kunststoffkontakte mit den Lichtleitfaserenden wie ein Buchsen- und ein Stiftkontakt zusammen.

Es ist weiter von besonderem Vorteil, die Halbschalen hermaphroditisch auszubilden. Dadurch wird eine kostengünstige und einfach herstellbare Kontakthülse angegeben.

Ausführungsbeispiele der Erfindung sollen nun anhand der Figuren erläutert werden.
Figur 1 zeigt eine perspektivische Ansicht eines Lichtleitfaserendes, das geeignet ist, um in die Kontakthülse eingebracht zu werden.
Figur 2 zeigt eine perspektivische Ansicht zweier Halbschalen einer Kontakthülse.
Figur 3 zeigt eine perspektivische Ansicht einer geschnittenen einteiligen Kontakthülse.
Figur 4 zeigt eine perspektivische Ansicht zweier Halbschalen einer Kontakthülse mit strukturierter Bohrung.
Figur 5 zeigt eine perspektivische Ansicht zweier hermaphroditischer Halbschalen.
Figur 6 zeigt je eine untere Halbschale des Stift- und Buchsenkontaktes.
Figur 7 zeigt eine Kontakthülse bestehend aus zwei Halbschalen, wobei eine der Halbschalen zusätzlich einen zylindrischen Aufnahmebereich aufweist.

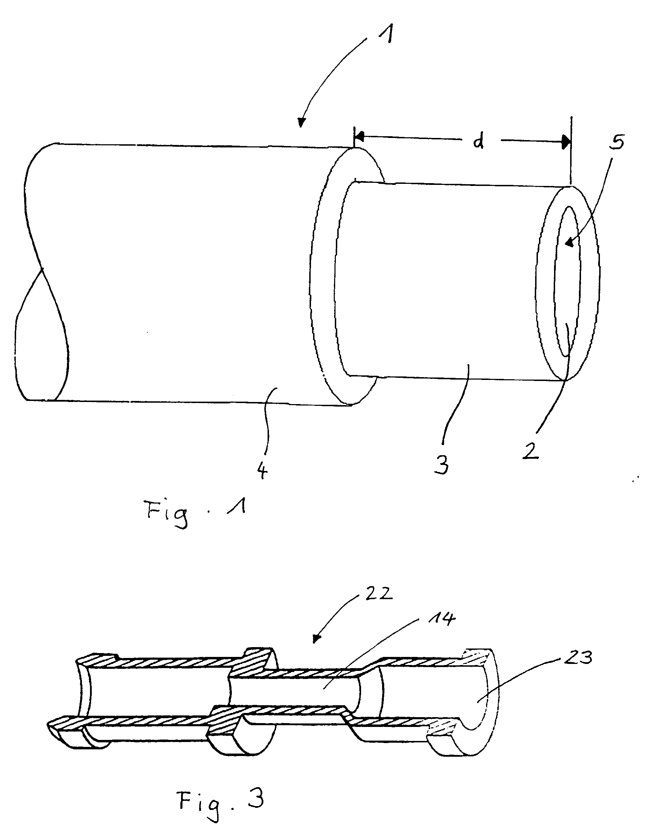

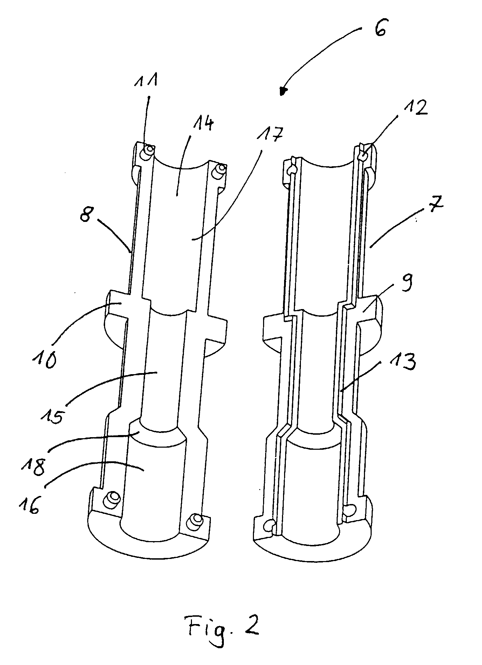

Figur 1 zeigt eine perspektivische Darstellung eines Lichtleitfaserendes 1. Die Lichtleitfaser und somit auch das Lichtleitfaserende 1 besteht aus einem Kern 2, der aus einem Kunststoff besteht und zur Lichtleitung dient, aus einem Primärmantel 3, der den Kern umgibt und aus einem Aussenmantel 4, der wiederum den Primärmantel umgibt. Die Grössenverhältnisse von Kern, Primärmantel und Aussenmantel sind derart, dass der Kern beispielsweise einen Durchmesser von 1mm aufweist, während der Primärmantel eine Dicke von 0.1mm bis 0.2mm aufweist und der Aussenmantel 4 eine Dicke von ungefähr 0.5mm aufweist. Der Gesamtdurchmesser der Lichtleitfaser beträgt ungefähr 2.2mm bis 2.4mm. Um das Lichtleitfaserende 1 in eine Kontakthülse einzubringen, wird der Aussenmantel 4 über eine Länge d vom Primärmantel 3 entfernt. Danach wird die Stirnfläche 5 des Lichtleitfaserendes abschliessend bearbeitet, um einen möglichst dämpfungsfreien Austritt von Licht aus dem Kern 2 zu ermöglichen. Nun kann das Lichtleitfaserende 1 in eine entsprechende Kontakthülse eingebracht werden.

In Figur 2 ist eine Kontakthülse 6 zur Aufnahme eines Lichtleitfaserendes 1 dargestellt. Die Kontakthülse 6 besteht hier aus zwei Halbschalen 7, 8. Die beiden Halbschalen 7, 8 weisen im Wesentlichen die Form eines halben Hohlzylinders auf, der entlang der Zylinderachse aufgetrennt wurde. An den Schnittflächen 9, 10, mit denen die Halbschalen 7, 8 aufeinander gefügt werden, befinden sich auf einer Seite Zentner- oder Positionierzapfen 11 und auf der entsprechenden gegenüberliegenden Seite Zentrierbohrungen 12. Mittels dieser Zapfen und Bohrungen 11, 12 werden die beiden Schalen 7, 8 beim Zusammenfügen zueinander positioniert und zentriert. Ausserdem weist eine der beiden Halbschalen eine Schweissrippe 13 auf, die als Ultraschallrichtungsgeber eingesetzt wird, und beim Ultraschallverschweissen der beiden Halbschalen 7, 8 miteinander eine Stelle hoher Erwärmung darstellt, die dann mit der Stirnseite 10 der anderen Kontaktschale verschmilzt.

Nach dem Verschmelzen der beiden Halbschalen 7, 8 ist ein Hohlzylinder mit einer Bohrung 14 gebildet. Das Aussehen der Bohrung 14 ist auch an den Halbschalen vor dem Zusammenfügen der Halbschalen zu erkennen. Die Bohrung 14 weist drei verschiedene Bereiche auf: einen ersten Bereich 15 geringen Durchmessers zur Aufnahme des Lichtleitfaserendes 1 ohne Aussenmantel, einen sich daran anschliessenden zweiten Bereich 16 grösseren Durchmessers zur Aufnahme des Lichtleitfaserendes mit Aussenmantel und einen sich an die andere Seite des ersten Bereichs 15 anschliessenden Aufnahmebereich 17. Dieser Aufnahmebereich 17 dient zur Aufnahme eines komplementären Kunststoffkontaktes mit einem Lichtleitfaserende, dessen freies Ende stiftförmig ausbildet ist und in den Hohlzylinder mit dem Bereich 17 einschiebbar ist.

Zwischen dem ersten und dem zweiten Bereich 16 der Bohrung befindet sich ein Absatz 18, der als Anhaltspunkt zum definierten Einbringen des Lichtleitfaserendes dient.

Das Befestigen eines Lichtleitfaserendes in der Kontakthülse läuft nun wie folgt ab. Zunächst wird das Lichtleitfaserende über einen Bereich d vom Aussenmantel 4 befreit und dann die Endfläche des Kerns bearbeitet. Danach wird das Lichtleitfaserende 1 in eine der Halbschalen 7, 8 eingelegt, und zwar derart, dass das stirnseitige Ende des Aussenmantels vor dem Absatz 18 zum Liegen kommt. Die abisolierte Länge d des Lichtleitfaserendes 1 ist dabei so abgemessen, dass die Stirnfläche des Lichtleitfaserendes 1 im Übergang zwischen dem ersten Bereich 15 und dem dritten Bereich 17 der Bohrung zum Liegen kommt. Nachdem das Lichtleitfaserende eingelegt ist, werden die beiden Kontaktschalen zusammengefügt und mittels Ultraschall verschweisst. Die lichte Weite zumindest eines der beiden Bereiche, des ersten Bereiches 15 oder des zweiten Bereiches 16, ist nun derart bemessen, dass sie ein leichtes Untermass unter dem Durchmesser des Lichtleitfaserendes 1 aufweist. Dadurch wird das Lichtleitfaserende 1 in der Kontakthülse geklemmt.

Falls eine solche Klemmung nicht gewünscht ist, ist es auch möglich, das Lichtleitfaserende zunächst nur zwischen die beiden Halbschalen 7, 8 einzubringen und dann von Aussen auf die Kontakthülse 6, einen Ultraschallgeber einwirken zu lassen, der ein Verschmelzen der Wandung der Bohrung mit dem Aussenmantel oder dem Primärmantel oder mit beidem bewirkt. Dadurch werden hohe Auszugskräfte erreicht, ohne dass ein Druck auf den Kern der Lichtleitfaser ausgeübt wird, was zu einer Erhöhung der Dämpfungswerte führt.

Will man keine Klemmung des Lichtleitfaserendes in der Kontakthülse erreichen, so ist es auch möglich, die Kontakthülse von als einteiligen Hohlzylinder 22 auszubilden. Eine perspektivische Ansicht eines entlang der Längsachse geschnittenen Hohlzylinders 22 ist in Figur 3 dargestellt. Von einem Ende 23 her, kann dann das Lichtleitfaserende 1 in die Bohrung 14 der Kontakthülse beziehungsweise des Hohlzylinders 22 eingeschoben werden. Nachdem das Lichtleitfaserende richtig positioniert ist, wird eine Ultraschallverbindung der Kontakthülse mit dem Lichtleitfaserende initiiert und das Lichtleitfaserende ist somit in der Kontakthülse gehalten. Die Befestigung des Lichtleitfaserendes in der Kontakthülse erfolgt hierbei am besten durch Ultraschall. Es ist dabei besonders hilfreich, wenn die Bohrung 14 der Kontakthülse eine Struktur an ihrer Wand aufweist. Die Struktur kann beispielsweise in Form von Längsrippen oder auch in Form eines Gewindes hergestellt werden. Das Ultraschallverschweissen mit dem Lichtleitfaserende wird dadurch erleichtert. Um besonders hohe Auszugskräfte zu erhalten, ist einer gewindeförmigen Strukturierung der Vorzug zu geben. Statt einer koaxialen Bohrung mit rundem Querschnitt kann die Kontakthülse auch eine Längsöffnung mit quadratischem oder dreieckigem Querschnitt , die ebenfalls koaxial angeordnet ist zur Zylinderachse der Kontakthülse aufweisen.

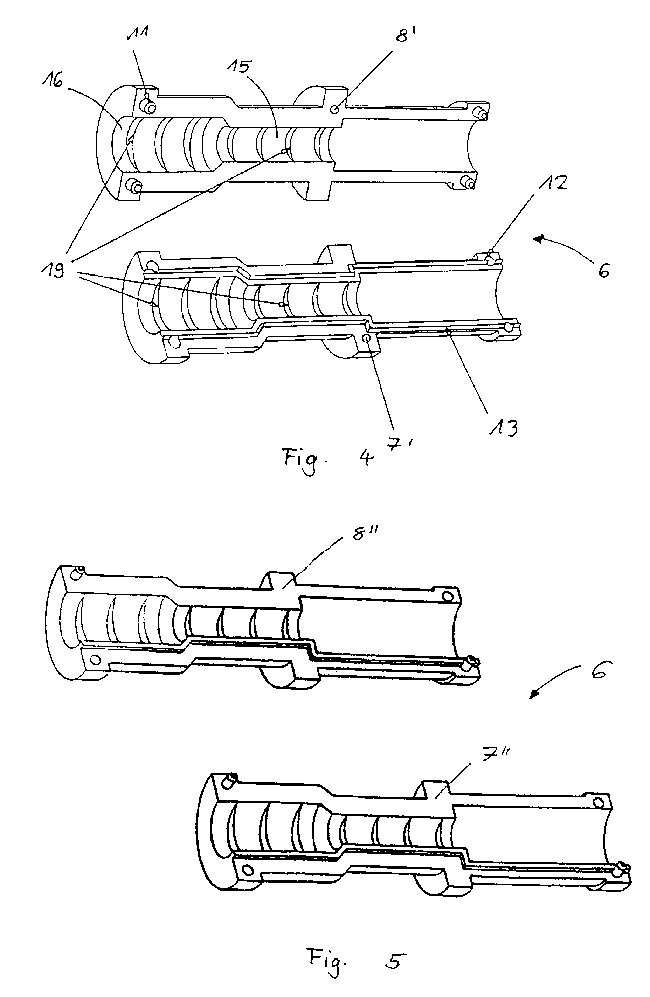

In Figur 4 ist nun eine weitere Kontakthülse dargestellt. Dies Kontakthülse 6 besteht ebenfalls aus zwei Halbschalen 7' und 8'. Die Halbschalen 7', 8' unterscheiden sich von den Halbschalen gemäss Figur 2 nur dadurch, dass sich in der Bohrung eine Struktur 19 befindet. Die Struktur 19 befindet sich sowohl im ersten Bereich 15, als auch im zweiten Bereich 16 der Bohrung und ist in beiden Halbschalen vorgesehen. Die Struktur 19 ist in Form von Querrippen ausgebildet. Beim Ultraschallverschweissen der Kontakthülse 6 mit dem Lichtleitfaserende 1 verschmelzen diese Querrippen mit dem Aussen- beziehungsweise Primärmantel des Lichtleitfaserendes 1.

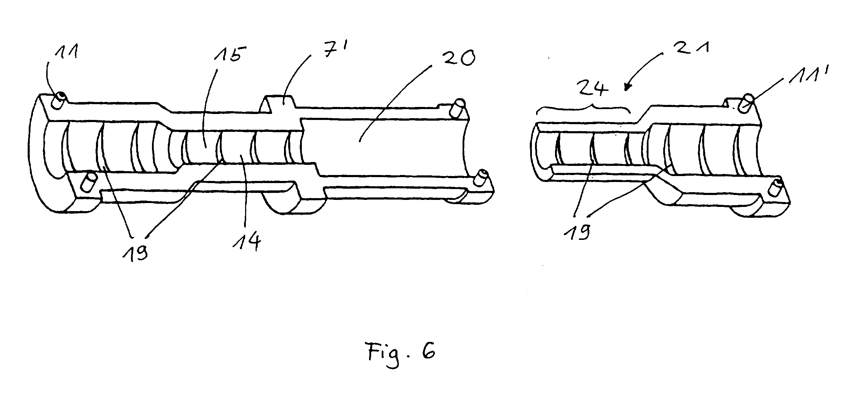

In Figur 5 sind ebenfalls zwei Halbschalen 7'', 8'' einer Kontakthülse 6 dargestellt. Diese Kontaktschalen 7'', 8'' sind hermaphroditisch ausgebildet.

In Figur 6 ist nun die untere Halbschale 7' gemäss Figur 4 mit der Struktur 19 nochmals dargestellt. Die Bohrung 14 weist wie früher bereits erwähnt einen Aufnahmebereich 20 auf, der sich an den ersten Bereich 15 der Bohrung anschliesst.

Neben dieser unteren Kontaktschale 7' ist eine zweite untere Kontaktschale 21 dargestellt. Diese zweite untere Kontaktschale 21 weist im Wesentlichen ebenfalls die Form eines halben Hohlzylinders auf. Sie besitzt ebenfalls Positionierzapfen 11' und ist innerhalb einer Bohrung strukturiert mit Querrippen 19. Sie ist ebenfalls mit einer entsprechenden oberen Kontaktschale verbindbar und zur Aufnahme eines Lichtleitfaserendes bestimmt. Der vordere Bereich 24 der Kontaktschale ist stiftförmig ausgebildet. Werden die beiden Kontaktschalen 21 mit der entsprechenden komplementären Kontaktschale zusammengefügt, so entsteht dabei ein stiftförmiger Kunststoffkontakt mit einem Lichtleitfaserende, der in dem Aufnahmebereich 20, des buchsenförmigen Kunststoffkontaktes mit der Kontakthülse 6 aufnehmbar ist. Somit können Lichtleiter mit Hilfe des Kunstoffkontaktes wie Stiftkontakte und Buchsenkontakte miteinander gekoppelt werden.

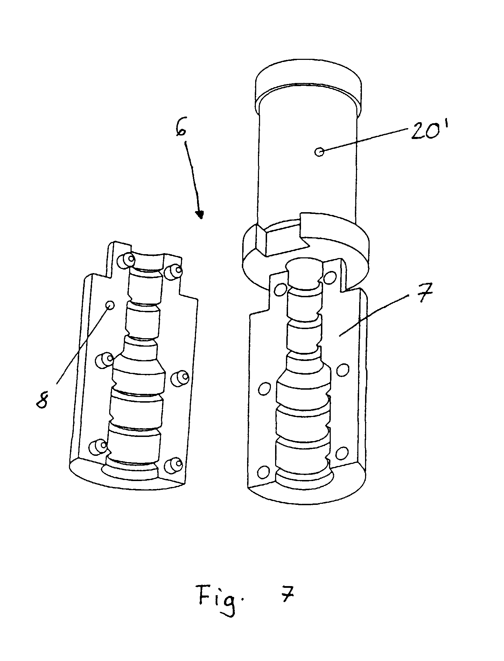

Um die Genauigkeit des Aufnahmebereiches 20, insbesondere der Bohrung dieses Aufnahmebereiches besonders genau zu erhalten, ist es sinnvoll, die Teilung der Kontakthülse 6 in Halbschalen in diesem Aufnahmebereich 20 nicht vorzunehmen. Ein entsprechendes Ausführungsbeispiel ist in Figur 7 dargestellt. Die beiden Halbschalen sind nur im Bereich der Aufnahme der Lichtleitfaser ausgebildet, während im Bereich der Aufnahme 20 ein Hohlzylinder 20' mit einer der Halbschalen verbunden ist. Dadurch ist sichergestellt, dass die Genauigkeit der Bohrung 14 im Bereich der Aufnahme 20 sehr hoch ist.

## Patentansprüche

1. Verfahren zum Befestigen eines Leichtleitfaserendes aus Kunststoff in einer Kontakthülse aus Kunststoff, wobei das Lichtleitfaserende (1) in eine definierte Lage in die Kontakthülse (6) eingebracht wird, dadurch gekennzeichnet, dass dann die Kontakthülse (6) mit Ultraschallenergie beaufschlagt wird und dass durch die Einwirkung des Ultraschalls Kontakthülse (6) und Lichtleitfaserende (1) miteinander verbunden werden.

2. Verfahren nach Anspruch 1, dadurch gekennzeichnet, dass im Bereich der Übergangsfläche zwischen Kontakthülse (6) und Lichtleitfaserende (1) diese miteinander verschmolzen werden.

3. Verfahren nach Anspruch 2, dadurch gekennzeichnet, dass die Kontakthülse (6) mit dem Aussenmantel (4) verschmolzen wird.

4. Verfahren nach einem der Ansprüche 2 oder 3, dadurch gekennzeichnet, dass die Kontakthülse (2) mit dem Primärmantel (3) verschmolzen wird.

5. Verfahren nach einem der Ansprüche 2, 3 oder 4, dadurch gekennzeichnet, dass die Kontakthülse (6) mit dem Kern (2) verschmolzen wird.

6. Verfahren nach Anspruch 1, dadurch gekennzeichnet, dass die Kontakthülse (6) zwei Halbschalen (7,8) aufweist, die mittels Ultraschall miteinander verbunden werden und zwischen denen das Lichtleitfaserende (1) geklemmt wird.

7. Verfahren nach Anspruch 1, dadurch gekennzeichnet, dass die Kontakthülse (6) zwei Halbschalen (7,8) aufweist, die miteinander verbunden werden und dass das Lichtleitfaserende (1) mit der Kontakthülse (6) mittels Ultraschall verschweisst wird.

8. Verfahren nach Anspruch 1, dadurch gekennzeichnet, dass die Kontakthülse (6) zwei Halbschalen (7,8) aufweist, die mittels Ultraschall miteinander verbunden werden, dass das Lichtleitfaserende (1) im Bereich des Aussenmantels (4) geklemmt und im Bereich des Primärmantels (3) oder Kernes (2) mit der Kontakthülse (6) ultraschallverschweisst wird.

9. Kunststoffkontakt mit einem Lichtleitfaserende (1) mit einer Kontakthülse (6) aus Kunststoff, die eine konzentrische Bohrung (14) aufweist zur Aufnahme des Lichtleitfaserende und mittels Ultraschall mit dem Lichtleitfaserende (1) verbunden ist.

10. Kunststoffkontakt nach Anspruch 6, dadurch gekennzeichnet, dass die Kontakthülse (6) zwei Halbschalen (7,8) aufweist, die mittels Ultraschall verbindbar sind.

11. Kunststoffkontakt nach Anspruch 7, dadurch gekennzeichnet, dass die Halbschalen (7,8) im Bereich der Bohrung (14) eine Struktur (19) aufweisen, derart, dass das Lichtleitfaserende (1) von der Struktur (19) geklemmt wird, wenn die Halbschalen (7,8) mittels Ultraschall verbunden sind.

12. Kunststoffkontakt nach Anspruch 6 bis 8, dadurch gekennzeichnet, dass die Bohrung (14) abgestuft ist, wobei ein erster Bereich (15) geringen Durchmessers zur Aufnahme des Lichtleitfaserendes (1) ohne Aussenmantel (4) und ein zweiter Bereich (16) grösseren Durchmessers zur Aufnahme des Lichtleitfaserendes mit Aussenmantel (4) vorgesehen ist.

13. Kunststoffmantel nach Anspruch 8, dadurch gekennzeichnet, dass die Struktur (19) mittels Ultraschall mit dem Lichtleitfaserende (1) verbindbar ist.

14. Kunststoffmantel nach Anspruch 9, dadurch gekennzeichnet, dass zumindest einer der Bereiche (15,16) eine Struktur (19) aufweist.

15. Kunststoffmantel nach einem der Ansprüche 8 oder 11, dadurch gekennzeichnet, dass die Struktur (19) in Form von Querrippen ausgebildet ist.
